# EUROPEAN PATENT APPLICATION

(11) **EP 4 797 472 A1**
(43) Date of publication of application: **26.08.2026**
(21) Application number: 25382151.6
(22) Date of filing: 19.02.2025
(51) Int. Cl.: H02G 3/06, H02G 3/04

(54) **CABLE TRAY ASSEMBLY**

(71) Applicant: Unex Aparellaje Electrico S.L., 08005 Barcelona (ES)
(72) Inventor: MOSTAZO OVIEDO, José Antonio, 08005 Barcelona (ES)
(74) Representative: Curell Suñol S.L.P.

(57) **Abstract**

The present invention relates to a cable tray assembly, comprising two U-shaped cable tray segments (1) and at least one L-shaped connection plate (4), with a side wing (5) and a bottom wing (6), which, in a coupling position, is pressure coupled to the two cable tray segments (1) to connect them to one another. In an intermediate position, the connection plate (4) is inclined and rests against the free end of the side wall (3) of the tray cable segments (1) and a support part (10) of the bottom wing (6) rests against a stop part (9) of the bottom wall (2) of the cable tray segments (1). To go from the intermediate position to the coupling position, the connection plate (4) pivots and is displaced towards the side wall (3).

## Description

### Field of the Invention

The invention is comprised in the field of cable trays which are used to guide and support bundles of electrical cables, optical fibre cables, or cables of another type.

More specifically, the invention relates to a cable tray assembly of the type comprising:
- two cable tray segments, with each of said two cable tray segments having a U-shaped cross-section, with a bottom wall and two facing side walls that are facing one another;
- and at least one connection plate having an L-shaped cross-section, with a side wing and a bottom wing forming said L-shaped cross-section;
   said connection plate and said two cable tray segments being shaped such that in a coupling position in which said two cable tray segments are arranged contiguous to and aligned with one another in a longitudinal direction of said two cable tray segments, said connection plate is coupled to said two cable tray segments by pressure coupling, such that said side wing of the connection plate is back-to-back with said side wall of the two cable tray segments, and said bottom wing of the connection plate is back-to-back with said bottom wall of the two cable tray segments;
   there being formed in said side walls of the two cable tray segments a first fitting part with which a corresponding second fitting part formed in said side wing of the connection plate fits in said coupling position;
   and there being formed in said bottom wall of the two cable tray segments, opposite each of said two side walls, a stop part against which a corresponding support part formed in said bottom wing of the connection plate rests in said coupling position;
   such that in said coupling position, said pressure coupling is performed by the fitting of said second fitting part with said first fitting part and the support of said support part against said stop part.

### State of the Art

EP2112733A1, EP721243A2, and EP2833496A1 disclose cable tray assemblies of the type indicated above. EP2833496A1 discloses a solution in which the free end of the side wing of the connection plate is connected to the upper end of the side wall of the cable tray segment, such that the connection plate pivots with respect to a pivoting axis located at the connection between these two ends.

### Description of the Invention

The purpose of the invention is to provide a cable tray assembly of the type indicated above, facilitating the handling of the connection plate and allowing the user to more readily perform the operation needed to bring said connection plate to the coupling position.

This purpose is achieved by means of a cable tray assembly of the type indicated above, characterised in that the two cable tray segments and the connection plate are configured such that in an intermediate position different of the coupling position, said connection plate is inclined with respect to its position in said coupling position and can pivot with respect to a pivoting axis located in the support part, the side wing rests against the free end of the side wall and the support part rests against one or both of the stop part and the bottom wall; and such that to go from the intermediate position to the coupling position, the connection plate pivots with respect to the pivoting axis in a pivoting direction in which the side wing of the connection plate is displaced towards the side wall. This solution allows the coupling to be performed in a particularly easy manner. The connection plate can be placed in the intermediate position by the user, or it can be supplied pre-placed in the intermediate position. From the intermediate position, the user must simply push the upper wing towards the side wall to easily perform the pressure coupling.

Preferably, the side wing comprises a retention part that, in the intermediate position, is retained by the free end of the side wall in two opposite pivoting directions of the connection plate with respect to the pivoting axis. The retention part is released from the free end of the side wall by elastic deformation of the side wall and/or of the connection plate, when a pushing force is exerted on the side wing to pivot the connection plate in either of the two pivoting directions. In the intermediate position, the connection plate can slide in the longitudinal direction to go from being placed in only one of the two cable tray segments to being placed straddling the two cable tray segments arranged contiguous to and aligned with one another in the longitudinal direction. This configuration allows the connection plate to be supplied pre-mounted in the intermediate position on a cable tray segment. To perform the connection of two cable tray segments, the user must simply arrange them one after the other in the longitudinal direction, pull on the connection plate in the longitudinal direction until it straddles the two segments, and finally push the upper wing towards the side wall to perform the pressure coupling.

Preferably, the retention part is formed by an inclined end segment of the side wing and by at least one tab projecting from the side wing and forming with this inclined end segment a V-shaped cross-section against which a rounded edge of the side wall of the cable tray segment rests in the intermediate position. This solution is particularly simple with regard to the geometry, and provides a sufficient but not excessive retention of the side wing in the two pivoting directions.

Preferably, the tab is elastically foldable and the inclined end segment of the side wing has an opening to receive said tab such that in the coupling position, said tab is folded elastically by support in the side wall and is housed in said opening. This elastic deformation of the tab contributes to and reinforces the pressure coupling.

Preferably, the tab is arranged such that in the coupling position, said tab is supported in the side wall at the inclined end segment of the side wall. This support of the tab at the inclined end segment, together with the elastic deformation of the tab created by said support, exerts on the connection plate a force having a component in the vertical direction and is directed towards the bottom wall, and it therefore contributes to keeping the bottom wing against the bottom wall. This even further reinforces the robustness of the pressure coupling against elastic deformations of the cable tray segments caused by the weight of the cables.

In preferred embodiments, the stop part of the two cable tray segments and the support part of the connection plate are formed such that they fit together in the coupling position, and said stop part of the two cable tray segments blocks the relative movement of said support part, with respect to the bottom wall, at least in a vertical direction perpendicular to said bottom wall, and in a direction away from said bottom wall. This fitting between the stop part of the two cable tray segments and the support part of the connection plate prevents the bottom wing from separating from the bottom wall in the vicinity of the stop part when the cable tray segment undergoes elastic bending caused by a significant weight of the cables laid in said cable tray segment. Accordingly, it prevents the support part from no longer resting against the stop part, and therefore causing a loss of the pressure coupling between the connection plate and the two cable tray segments, due to this elastic bending of the bottom wall.

In the preferred embodiments, the second fitting part is formed at a free end of the side wing, and the support part is formed at a free end of the bottom wing. This configuration facilitates an elastic deformation of the cable tray segments and/or of the connection plate to perform the pressure coupling.

Preferably, the stop part protrudes from the bottom wall. This configuration facilitates the positioning of the connection plate before performing the pressure coupling. Furthermore, preferably, the thickness of the bottom wall in a segment of said bottom wall, between the stop part and the side wall closest to same, is greater than the thickness of the bottom wall on the other side of this same stop part. The rigidity of the bottom wall between the stop part and the closest side wall, i.e., in the segment contiguous to the side wall, is therefore increased, thereby reducing the elastic deformation in this segment when the cable tray segments support a significant cable weight. This contributes to even further preventing decoupling from occurring. Moreover, increasing the thickness of the bottom wall on only one side of the stop part does not have any negative effect. In particular, it does not introduce a discontinuity in the surface of the bottom wall, since in any case the discontinuity already exists due to the presence of the stop part.

In preferred embodiments, the stop part protrudes from the bottom wall and forms at least one cavity open towards one of the two facing side walls, and in the coupling position, at least one part of the support part is inserted into said cavity in a transverse direction, perpendicular to the longitudinal direction and parallel to the bottom wall and covered in said vertical direction by a face of said cavity opposite said bottom wall. This configuration has the advantage of having a simple geometry and providing a sufficiently robust blocking of the relative movement of the support part in the vertical direction and in the direction of separation from the bottom wall.

Preferably, the stop part is a bent lug projecting from the bottom wall and comprising an end segment facing said bottom wall, such that the cavity is a space comprised between said end segment of the bent lug and said bottom wall, and the face of said cavity, covering the support part inserted into said cavity, is a face of said end segment of the bent lug. This configuration has a particularly simple geometry, and likewise provides a sufficiently robust blocking of the relative movement of the support part in the vertical direction and in the direction of separation from the bottom wall.

In preferred embodiments, the cavity is open towards the side wall closest to the stop part forming said cavity. This configuration even further facilitates the positioning of the connection plate before performing the pressure coupling between the connection plate and the cable tray segments and facilitates performing this pressure coupling by pivoting the connection plate.

Preferably, the support part is a lip formed on an edge of the free end of the bottom wing. This solution provides a simple geometry of the support part, without protruding parts susceptible to getting caught on the cables during installation.

In preferred embodiments, each of the two side walls has an inclined end segment inclined towards the opposite side wall, and the first fitting part is a rounded edge at the free end of said inclined end segment of the side wall. The side wing has an inclined end segment and the second fitting part is a grip formed at the free end of said inclined end segment of the side wing, said grip comprising a concave surface facing away from the bottom wing and having a complementary shape with respect to the shape of said rounded edge such that a convex surface of said rounded edge facing the bottom wall is fitted into said concave surface of the grip in the coupling position. This configuration provides a fitting of the second fitting part with the first fitting part that is robust and particularly easy to perform by pivoting the connection plate.

Preferably, in the coupling position, the free end of the side wing does not protrude in the vertical direction with respect to the free end of the side wall. This configuration has the advantage that the connection plate pressure coupled to the cable tray segments does not change the perimeter of the cable tray segments, making it possible to use the same cover as the one used for the cable tray segments alone without modifications.

Preferably, each of the two cable tray segments is a profile made of a polymer material and, preferably, the connection plate is a single part made of a polymer material.

The invention also comprises other detail features shown in the following detailed description of an embodiment of the invention and in the attached figures.

### Brief Description of the Drawings

The advantages and features of the invention are apparent from the following description in which preferred embodiments of the invention are described in reference to the figures in a non-limiting manner with respect to the scope of the main claim.
Figure 1 is a perspective view of a first embodiment of a cable tray assembly formed by two cable tray segments and two connection plates in the coupling position.
Figure 2 is a perspective view of a cable tray segment of the assembly.
Figure 3 is a front view of the cable tray segment of the assembly.
Figure 4 is an enlarged detail view of Figure 3 showing the area close to the side wall.
Figures 5, 6, and 7 are, respectively, a front perspective view, a rear perspective view, and a front view of the connection plate of the assembly.
Figure 8 is a front view showing the cable tray segment and the connection plate in the intermediate position.
Figure 9 is a front view showing the cable tray segment and the connection plate in the coupling position.
Figure 10 is a perspective view showing the cable tray segment and the connection plate in the intermediate position.
Figure 11 is a perspective view showing the cable tray segment and the connection plate in the coupling position.
Figure 12 is an enlarged partial view of Figure 11.
Figure 13 is a perspective view of a variant of the connection plate according to the first embodiment without the elongated holes.

### Detailed Description of Embodiments of the Invention

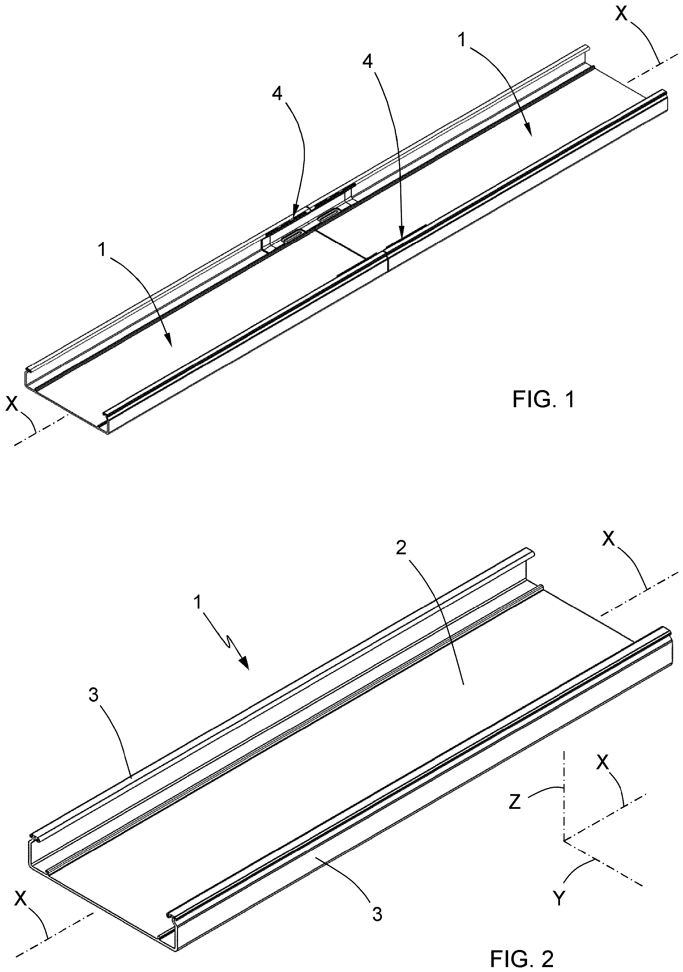

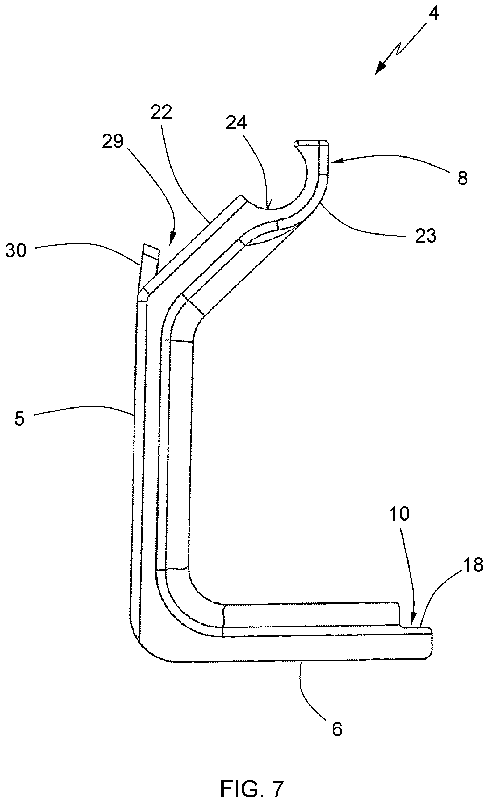

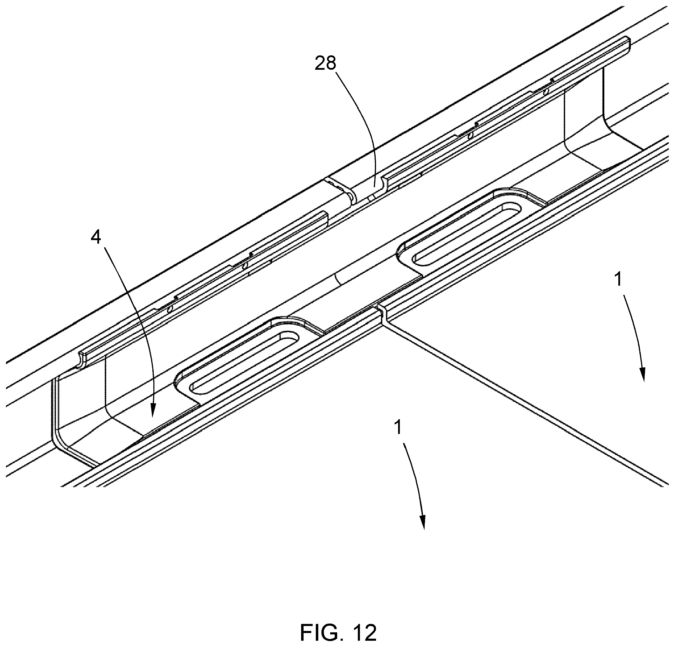

Figures 1 to 12 show a first embodiment of a cable tray assembly according to the invention. The assembly is formed by two cable tray segments 1 and two connection plates 4 to connect the two cable tray segments 1 to one another, as shown in Figures 1, 11, and 12.

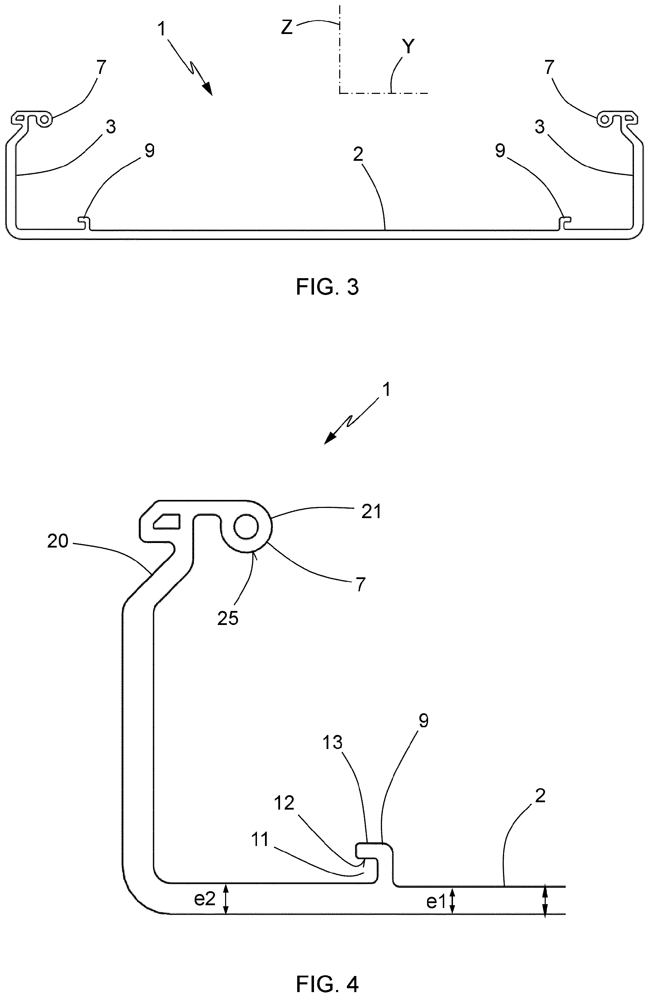

In the described example, the two cable tray segments 1 are two straight segments having the same cross-section shape and being able to have different lengths. As seen in Figures 2 to 4, each cable tray segment 1 has a U-shaped cross-section, with a bottom wall 2 and two facing side walls 3 that are facing one another. There is formed in each of the two side walls 3 a first fitting part 7 which, as will be seen below, fits with a corresponding second fitting part 8 formed in the connection plate 4. More specifically, each of the side walls 3 has an inclined end segment 20 inclined towards the opposite side wall 3, and the first fitting part 7 is a rounded edge 21 at the free end of said inclined end segment 20. There is formed in the bottom wall 2, opposite each of the two side walls 3, a stop part 9. As will be seen below, this stop part 9 is intended to receive as a support a corresponding support part 10 formed in the connection plate 4. In this first embodiment, the stop part 9 is a bent lug projecting from the bottom wall 2 and comprising an end segment 13 facing said bottom wall 2. The space comprised between the end segment 13 and the bottom wall 2 is a cavity 11 which is open towards the side wall 3 closest to the stop part 9 forming said cavity 11. As indicated in Figure 4, the thickness e2 of the bottom wall 2 in a segment of said bottom wall, between the stop part 9 and the side wall 3 closest to same, is greater than the thickness e1 of said bottom wall 2 on the other side of this same stop part 9.

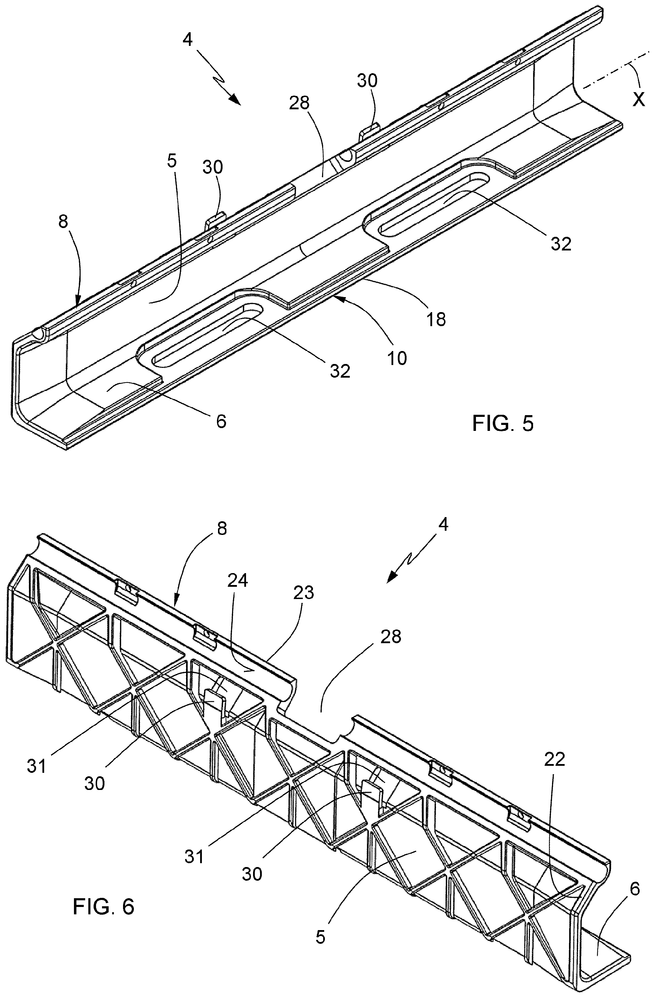

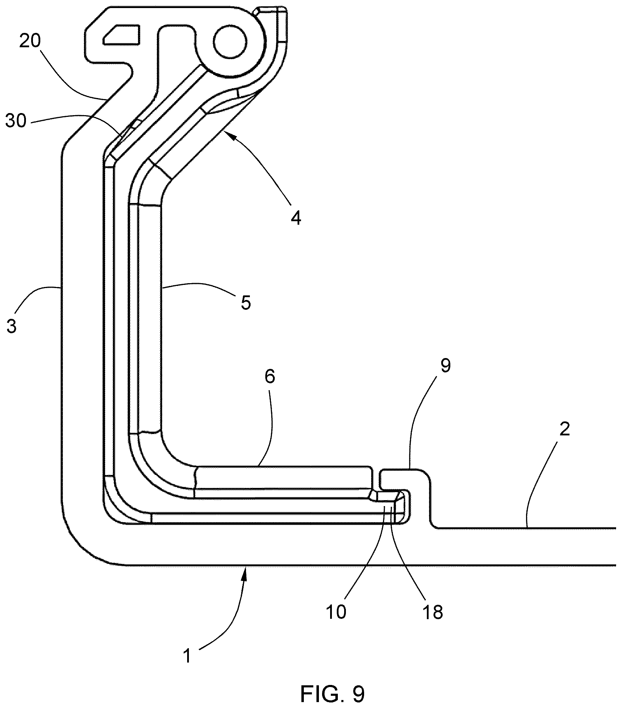

The two connection plates 4 are identical. In a coupling position shown in Figures 9, 11, and 12, each connection plate 4 is coupled to one of the two side walls 3 of the cable tray segments 1. As can be seen in Figures 5 to 7, each connection plate 4 has an L-shaped cross-section, with a side wing 5 and a bottom wing 6 forming the L-shaped cross-section. The side wing 5 has an inclined end segment 22. A second fitting part 8 is formed at a free end of the side wing 5 to fit with the first fitting part 7 formed at the free end of each side wall 3. The second fitting part 8 is a grip 23 formed at the free end of the inclined end segment 22 of the side wing 5.

The grip 23 comprises a concave surface 24 facing away from the bottom wing 6 and having a complementary shape with respect to the shape of the rounded edge 21 to fit with a convex surface 25 of said rounded edge 21. The grip 23 extends along the longitudinal direction X and comprises a notch 28 formed in a central position with respect to said longitudinal direction X. It is intended for a fitting end of a retaining bridge (not shown in the figures) to go through the notch 28. A support part 10 is formed at the free end of the bottom wing 6. In this first embodiment, the support part 10 is a lip 18 formed on an edge of the free end of the bottom wing 6 inserted into the cavity 11 formed by the stop part 9 in the form of a lug in the bottom wall 2 of the cable tray segment 1.

The two connection plates 4 are used to couple the two cable tray segments 1 to one another. To that end, the two cable tray segments 1 are arranged contiguous to and aligned with one another in a longitudinal direction X, as indicated in Figure 1. In this position, the side walls 3 and the bottom wall 2 of the two cable tray segments 1 are contiguous. Each of the two connection plates 4 is coupled to the two cable tray segments 1 by pressure coupling. In this coupling position, shown in Figures 9, 11, and 12, the side wing 5 of the connection plate 4 is back-to-back with the two contiguous side walls 3 of the two cable tray segments 1, and the bottom wing 6 of the connection plate 4 is back-to-back with the two contiguous bottom walls 2 of the two cable tray segments 1. The second fitting part 8 formed at the free end of the side wing 5 of the connection plate 4 fits with the first fitting part 7 formed at the free end of each side wall 3. More specifically, a convex surface 25 of the rounded edge 21 facing the bottom wall 2 fits with the concave surface 24 of the grip 23. The fitting of the second fitting part 8 with the first fitting part 7 keeps the side wing 5 back-to-back with the side wall 3. Furthermore, in the coupling position, the lip 18 is inserted into the cavity 11 in a transverse direction Y, perpendicular to the longitudinal direction X and parallel to the bottom wall 2 and covered in a vertical direction Z perpendicular to the bottom wall 2 by a face 12 of the cavity 11 opposite the bottom wall 2. This face 12 is the lower face of the end segment 13 of the bent lug forming the stop part 9. The stop part 9 in the bottom wall 2 of the two cable tray segments 1 and the support part 10 at the free end of the bottom wing 6 of the connection plate 4 thereby fit together. The stop part 9 of the two cable tray segments 1 blocks the relative movement of the support part 10 with respect to the bottom wall 2 in the vertical direction Z and in a direction away from said bottom wall. This blocking is performed by the end segment 13 of the bent lug which forms a stop through its lower face 12 that prevents the movement of the lip 18 in the vertical direction Z. The pressure coupling of the connection plate 4 with the two cable tray segments 1 is held by the fitting of the second fitting part 8 with said first fitting part 7 and the support of the support part 10 in the stop part 9, and by the elastic deformation of the side wall 3 which allows said pressure coupling.

As seen in Figure 9, in the coupling position, the free end of the side wing 5 of the connection plate 4 does not protrude in the vertical direction Z with respect to the free end of the side wall 3. More specifically, in the depicted embodiment, the free end of the side wall 3 has a flat upper face parallel to the bottom wall 2, and the free end of the side wing 5 also has a flat upper face coplanar with said flat upper face of the free end of the side wing 5.

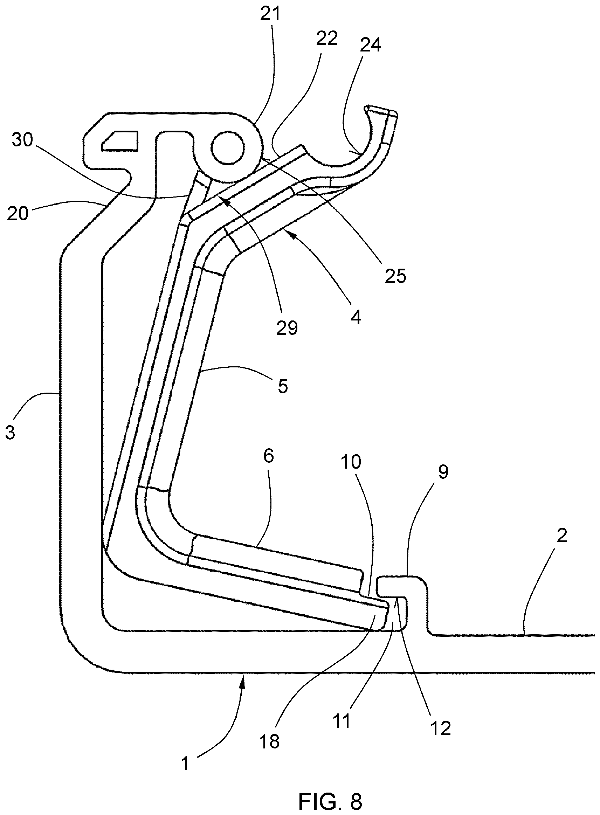

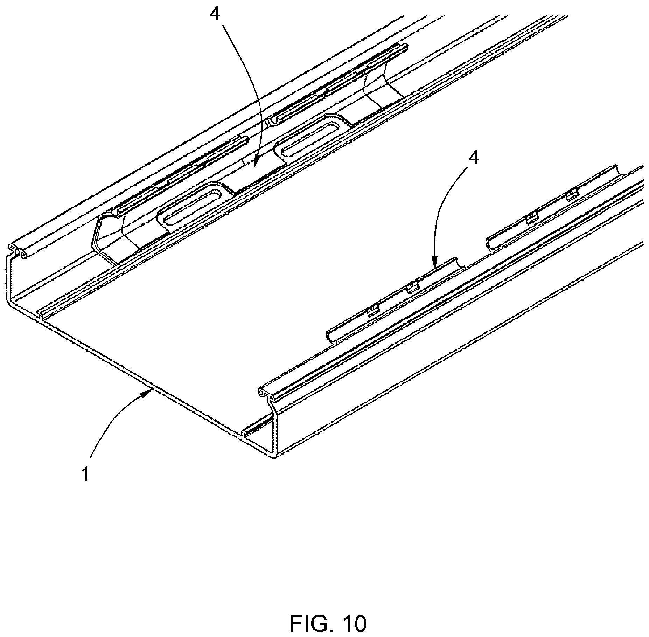

The two cable tray segments 1 and the connection plates 4 are configured so that each connection plate 4 can be arranged in an intermediate position different from the coupling position, shown in Figures 8 and 10. In this intermediate position, the connection plate 4 is inclined with respect to the coupling position and can pivot with respect to a pivoting axis located in the support part 10. The side wing 5 rests against the free end of the side wall 3 and the support part 10 rests against the stop part 9 and on the bottom wall 2. More specifically, the lip 18 rests against the bottom wall 2 and on the face 12 of the end segment 13 of the bent lug. The side wing 5 comprises a retention part 29 which is retained in the intermediate position by the free end of the side wall 3 in two opposite pivoting directions of the connection plate 4 with respect to the pivoting axis. The retention part 29 is formed by the inclined end segment 22 of the side wing 5 and by a tab 30 projecting from the side wing 5 and forming with this inclined end segment 22 a V-shaped cross-section against which the rounded edge 21 of the side wall 3 rests in the intermediate position. The tab 30 is elastically foldable and the inclined end segment 22 of the side wing 5 has an opening 31 to receive said tab 30 such that in the coupling position, the tab 30 is folded elastically by support in the side wall 3 and is housed in the opening 31. The tab 30 is arranged such that in the coupling position, said tab 30 is supported in the side wall 3 at the inclined end segment 20 of the side wall 3.

The retention part 29 is released from the rounded edge 21 at the free end of the inclined end segment 20 of the side wall 3 by elastic deformation of the side wall 3 when a pushing force is exerted on the side wing 5 to pivot the connection plate 4 in either of the two pivoting directions with respect to the pivoting axis located in the support part 10. In the intermediate position, the connection plate 4 can slide in the longitudinal direction X to go from being placed in only one of the two cable tray segments 1 to being placed straddling the two cable tray segments 1 arranged contiguous to and aligned with one another in the longitudinal direction X. To go from the intermediate position to the coupling position, the connection plate is pivoted with respect to the pivoting axis located in the support part 10 in a pivoting direction in which the side wing 5 of the connection plate 4 is displaced towards the side wall 3.

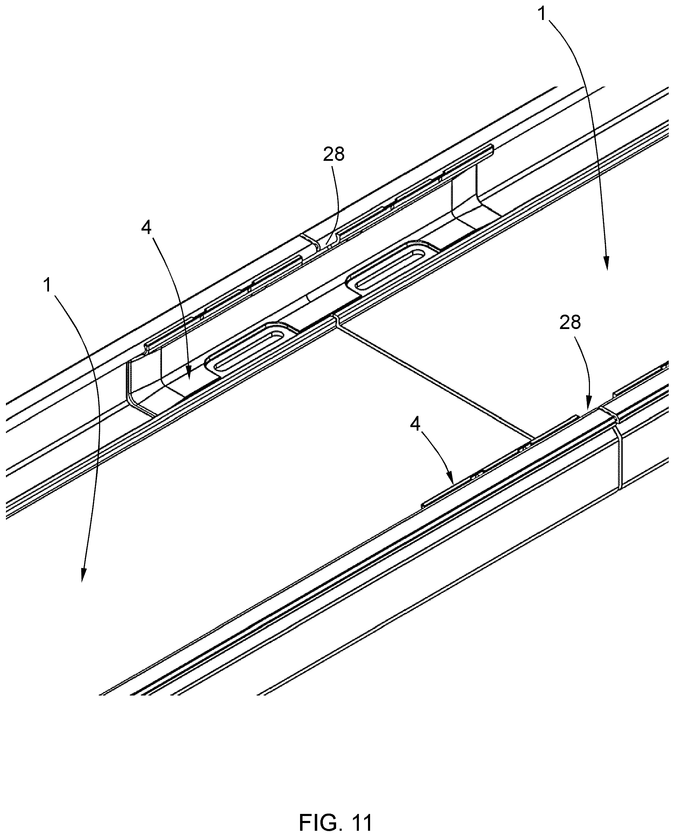

In practice, the connection plates 4 are used as follows. Each cable tray segment 1 has at least one pre-mounted connection plate 4. In the embodiment shown in Figure 10, each cable tray segment 1 has two pre-mounted connection plates 4, each of which is placed on one of the two side walls 3 and in the intermediate position. In an advantageous presentation not shown in the figures, the two connection plates 4 are pre-mounted in the intermediate position in each cable tray segment 1 as follows: a connection plate 4 is arranged in a side wall 3 and at an end of the cable tray segment 1, and the other connection plate 4 is arranged in the opposite side wall 3 and at the opposite end of the same cable tray segment 1. The user places the two cable tray segments 1 contiguous to one another in the longitudinal direction X and slides each connection plate 4 in said longitudinal direction X until it is straddling the two cable tray segments 1. Then, the user pushes the side wing 5 from the intermediate position towards the side wall 3 so that the retention part 29 is released from the rounded edge 21 at the free end of the inclined end segment 20 of the side wall 3 and the connection plate 4 pivots with respect to the pivoting axis located in the support part 10 in the pivoting direction in which the side wing 5 of the connection plate 4 is displaced towards the side wall 3. At the end of this pivoting movement, the user exerts a final pressure on the side wing 5, causing an elastic deformation of the side wall 3 to pressure couple the connection plate 4 to the two cable tray segments 1 and thereby reach the coupling position shown in Figures 9 and 11. If the user does not want to use pre-mounted connection plates 4, the user can readily remove them. To that end, from the intermediate position, the user pulls on the side wing 5 to separate it from the side wall 3, pivoting it in a pivoting direction opposite the direction described above, thereby causing the retention part 29 to be released from the rounded edge 21 at the free end of the inclined end segment 20 of the side wall 3.

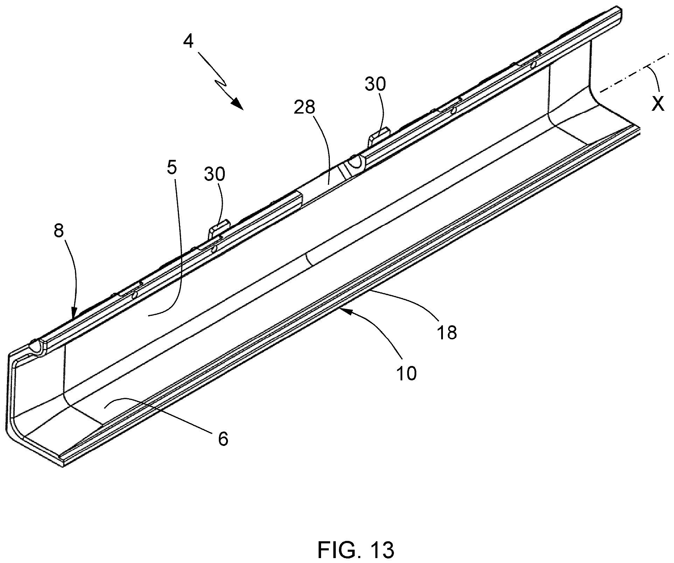

Optionally, elongated through holes 32 extending in the longitudinal direction are formed in the bottom wing 6 of the connection plate 4. These elongated holes 32 allow the passage of fixing screws that go through corresponding through holes (not depicted) formed in the bottom wall 2 of the cable tray segments 1. Around the elongated holes 32, the upper face of the bottom wing 6 has a recess to accommodate the heads of the fixing screws. In most applications, it is not necessary to use fixing screws given that the pressure coupling between the connection plate 4 and the two cable tray segments 1 is strong enough. In a preferred variant shown in Figure 13, the connection plate 4 is devoid of elongated holes in the bottom wing 6. The connection plate 4 shown in Figure 13 is identical to the one described above in relation to Figures 5 to 7, except that it does not have the elongated holes 32 or the recess around them. Advantageously, to minimize interference with the cables, in the connection plate 4 shown in Figure 13 the bottom wing 6 has a smooth and continuous upper face.

The cable tray segments 1 are extruded profiles made of a polymer material, preferably a thermoplastic such as PVC, polycarbonate, or polypropylene. The connection plates 4 are moulded from a single part made of a polymer material, preferably a thermoplastic such as PVC, polycarbonate, or polypropylene. The polymer material can be the same or different for each of the elements 1 and 4.

## Claims

1. A cable tray assembly, comprising:
- two cable tray segments (1), with each of said two cable tray segments (1) having a U-shaped cross-section, with a bottom wall (2) and two facing side walls (3) that are facing one another;
- and at least one connection plate (4) having an L-shaped cross-section, with a side wing (5) and a bottom wing (6) forming said L-shaped cross-section;
said connection plate (4) and said two cable tray segments (1) being shaped such that in a coupling position in which said two cable tray segments (1) are arranged contiguous to and aligned with one another in a longitudinal direction (X) of said two cable tray segments (1), said connection plate (4) is coupled to said two cable tray segments (1) by pressure coupling, such that said side wing (5) of the connection plate (4) is back-to-back with said side wall (3) of the two cable tray segments (1), and said bottom wing (6) of the connection plate (4) is back-to-back with said bottom wall (2) of the two cable tray segments (1);
there being formed in said side walls (3) of the two cable tray segments (1) a first fitting part (7) with which a corresponding second fitting part (8) formed in said side wing (5) of the connection plate (4) fits in said coupling position, such that the fitting of said second fitting part (8) with said first fitting part (7) keeps said side wing (5) back-to-back with said side wall (3); and there being formed in said bottom wall (2) of the two cable tray segments (1), opposite each of said two side walls (3), a stop part (9) against which a corresponding support part (10) formed in said bottom wing (6) of the connection plate (4) rests;
such that in said coupling position, said pressure coupling is held by the fitting of said second fitting part (8) with said first fitting part (7) and the support of said support part (10) against said stop part (9);
**characterised in that** said two tray cable segments (1) and said connection plate (4) are configured such that, in an intermediate position different from said coupling position, said connection plate (4) is inclined with respect to its position in said coupling position and can pivot with respect to a pivoting axis located in said support part (10), said side wing (5) rests against the free end of said side wall (3) and said support part (10) rests against one or both of said stop part (9) and said bottom wall (2); and such that, to go from said intermediate position to said coupling position, said connection plate (4) pivots, with respect to said pivoting axis, in a pivoting direction in which said side wing (5) of the connection plate (4) is displaced towards said side wall (3).

2. The cable tray assembly according to claim 1, **characterised in that** said side wing (5) comprises a retention part (29) that, in said intermediate position, is retained by said free end of the side wall (3) in two opposite pivoting directions of said connection plate (4) with respect to said pivoting axis, and said retention part (29) is released from said free end of the side wall (3) by elastic deformation of said side wall (3) and/or of said connection plate (4), when a pushing force is exerted on said side wing (5) to pivot said connection plate (4) in either of the two pivoting directions, and in said intermediate position said connection plate (4) can slide in said longitudinal direction (X) to go from being placed in only one of the two tray cable segments (1) to being placed straddling the two tray cable segments (1) arranged contiguous to and aligned with one another in the longitudinal direction (X).

3. The cable tray assembly according to claim 2, **characterised in that** said retention part (29) is formed by an inclined end segment (22) of the side wing (5) and by at least one tab (30) projecting from said side wing (5) and forming with this inclined end segment (22) a V-shaped cross-section against which a rounded edge (21) of the side wall (3) rests in said intermediate position.

4. The cable tray assembly according to claim 3, **characterised in that** said tab (30) is elastically foldable and said inclined end segment (22) of the side wing (5) has an opening (31) to receive said tab (30) such that in said coupling position, said tab (30) is folded elastically by support in said side wall (3) and is housed in said opening (31).

5. The cable tray assembly according to claim 4, **characterised in that** said tab (30) is arranged such that in said coupling position, said tab (30) is supported in said side wall (3) at an inclined end segment (20) of the side wall (3).

6. The cable tray assembly according to any one of claims 1 to 5, **characterised in that** said stop part (9) of the two cable tray segments (1) and said support part (10) are formed such that they fit together in said coupling position, and said stop part (9) of the two cable tray segments (1) blocks the relative movement of said support part (10), with respect to said bottom wall (2), at least in a vertical direction (Z) perpendicular to said bottom wall (2), and in a direction away from said bottom wall (2).

7. The cable tray assembly according to claim 7, **characterised in that** said stop part (9) protrudes from said bottom wall (2) and forms at least one cavity (11) open towards the side wall (3) closest to the stop part (9) forming said cavity (11), and in the coupling position, at least one part of said support part (10) is inserted into said cavity (11) in a transverse direction (Y), perpendicular to said longitudinal direction (X) and parallel to said bottom wall (2) and covered in said vertical direction (Z) by a face (12) of said cavity (11) opposite said bottom wall (2).

8. The cable tray assembly according to claim 7, **characterised in that** said stop part (9) is a bent lug projecting from said bottom wall (2) and comprising an end segment (13) facing said bottom wall (2), such that said cavity (11) is a space comprised between said end segment (13) of the bent lug and said bottom wall (2), and said face (12) of said cavity (11) is a face of said end segment (13) of the bent lug.

9. The cable tray assembly according to claim 8, **characterised in that** said support part (10) is a lip (18) formed on an edge of the free end of said bottom wing (6).
